# EUROPEAN PATENT APPLICATION

(11) **EP 4 775 014 A1**
(43) Date of publication of application: **15.07.2026**
(21) Application number: 26151298.2
(22) Date of filing: 12.01.2026
(51) Int. Cl.: A01D 34/68, A01D 34/82

(54) **OUTDOOR POWER EQUIPMENT SAFETY DEVICE**

(30) Priority: 14.01.2025 US 202519020509
(71) Applicant: Black & Decker, Inc., New Britain, CT 06053 (US)
(72) Inventor: WEBER, David P., Strongsville, 44149 (US); DRISCOLL, Mark P., Strongsville, 44136 (US)
(74) Representative: SBD IPAdmin

(57) **Abstract**

An outdoor power equipment system includes: a motor; a power supply; and a user-engageable safety device, the safety device comprising: a rotatable member connected to a handle of the outdoor power equipment, wherein the rotatable member is configured to rotate about a rotation axis between a locked position and an unlocked position; a plunger operatively connected to the rotatable member such that rotation of the rotatable member causes the plunger to translate along the rotation axis of the rotatable member; and a switch, wherein: the plunger is configured to open the switch when the rotatable member is in the locked position to electrically connect the power supply to the motor, and wherein the plunger is configured to close the switch when the rotatable member is in the unlocked position to electrically isolate the power supply from the motor.

## Description

### FIELD

This disclosure relates generally to a safety device for outdoor power equipment, and more specifically to user-engageable safety devices for outdoor power equipment.

### BACKGROUND

Outdoor power equipment, including walk-behind lawn mowers and walk-behind snow blowers, typically include rotary blades, such as cutting blades, fan blades, etc. Such blades are often exposed (e.g., on an underside of the outdoor power equipment). For instance, walk-behind lawn mowers include an exposed cutting blade to enable the mower to cut grass as it is pushed along the ground. The rotary blades included on various outdoor power equipment pose safety hazards if activated by mistake, for instance, when the equipment is in storage.

### SUMMARY

Disclosed herein are outdoor power equipment systems (e.g., walk-behind lawn mowers, walk-behind snow blowers, walk-behind rototillers, wheeled chipper shredder vacs, wheeled string trimmers, etc.) that include a user-engageable safety device. An exemplary outdoor power equipment system may include a motor and a power supply. The user-engageable safety device may enable users to selectively connect the power supply to, or isolate the power supply from, the motor of the outdoor power equipment system. The user-engageable safety device may be configured such that a user can toggle between a locked configuration and an unlocked configuration. The user-engageable safety device may be configured to connect the power supply to the motor when the safety device is in the locked configuration. The user-engageable safety device may be configured to isolate the power supply from the motor when the safety device is in the unlocked configuration.

According to some aspects, an exemplary outdoor power equipment system includes a motor; a power supply; and a user-engageable safety device, the safety device comprising: a rotatable member connected to a handle of the outdoor power equipment, wherein the rotatable member is configured to rotate about a rotation axis between a locked position and an unlocked position; a plunger operatively connected to the rotatable member such that rotation of the rotatable member causes the plunger to translate along the rotation axis of the rotatable member; and a switch, wherein: the plunger is configured to extend through the handle to open the switch when the rotatable member is in the locked position to electrically connect the power supply to the motor such that the motor can be activated, and wherein the plunger is configured to retract within the handle to close the switch when the rotatable member is in the unlocked position to electrically isolate the power supply from the motor such that the motor cannot be activated.

Optionally, the rotatable member is configured such that rotation of the rotatable member causes the rotatable member to translate along the rotation axis. Optionally, the rotatable member is configured such that rotation of the rotatable member by 90 degrees causes the rotatable member to translate between the locked position and the unlocked position. Optionally, rotation of the rotatable member causes the rotatable member and the plunger to translate along the rotation axis in the same direction. Optionally, the rotatable member is positioned on a first side of the handle and the switch is positioned on a second side of the handle opposite the first side. Optionally, the plunger is biased toward the second side by a biasing member. Optionally, the safety device comprises: a lever; and a cam, wherein translation of the plunger causes the lever to rotate about a second rotation axis, and wherein the cam is attached to the lever such that the cam rotates with the lever. Optionally, the cam is configured to engage the switch when the rotatable member is in the unlocked position and wherein the cam is configured to disengage the switch when the rotatable member is in the locked position. Optionally, the switch comprises a normally open portion and a normally closed portion, and wherein when the rotatable member is in the locked position, the normally open portion is open. Optionally, when the rotatable member is in the unlocked position, the normally open portion is closed. Optionally, the switch is a microswitch, an optical switch, or a hall effect switch. Optionally, the switch is disposed within a housing of the safety device. Optionally, the plunger extends into the housing when the rotatable member is in the locked position. Optionally, the housing is configured to be mounted to a side plate of the outdoor power equipment. Optionally, the power supply comprises a battery. Optionally, the rotatable member is configured to lock the handle such that the handle is prevented from rotating about a handle rotation axis when the rotatable member is in the locked position. Optionally, the rotatable member is configured to unlock the handle such that the handle is free to rotate about a handle rotation axis when the rotatable member is in the unlocked position.

According to some aspects, a walk-behind mower comprises: a motor; a power supply; and a user-engageable safety device, the safety device comprising: a rotatable member connected to a handle of the outdoor power equipment, wherein the rotatable member is configured to rotate about a rotation axis between a locked position and an unlocked position; a plunger operatively connected to the rotatable member such that rotation of the rotatable member causes the plunger to translate along the rotation axis of the rotatable member; and a switch, wherein: the plunger is configured to extend through the handle to open the switch when the rotatable member is in the locked position to electrically connect the power supply to the motor such that the motor can be activated, and wherein the plunger is configured to retract within the handle to close the switch when the rotatable member is in the unlocked position to electrically isolate the power supply from the motor such that the motor cannot be activated.

According to some aspects, a walk-behind snow blower, rototiller, wheeled chipper shredder vac, or wheeled string trimmer comprises: a motor; a power supply; and a user-engageable safety device, the safety device comprising: a rotatable member connected to a handle of the outdoor power equipment, wherein the rotatable member is configured to rotate about a rotation axis between a locked position and an unlocked position; a plunger operatively connected to the rotatable member such that rotation of the rotatable member causes the plunger to translate along the rotation axis of the rotatable member; and a switch, wherein: the plunger is configured to extend through the handle to open the switch when the rotatable member is in the locked position to electrically connect the power supply to the motor such that the motor can be activated, and wherein the plunger is configured to retract within the handle to close the switch when the rotatable member is in the unlocked position to electrically isolate the power supply from the motor such that the motor cannot be activated.

According to some aspects, a safety device for outdoor power equipment comprises: a rotatable member configured to be connected to a handle of the outdoor power equipment, wherein the rotatable member is configured to rotate about a rotation axis between a locked position and an unlocked position; a plunger operatively connected to the rotatable member such that rotation of the rotatable member causes the plunger to translate along the rotation axis of the rotatable member; and a switch, wherein: the plunger is configured to extend through the handle to open the switch when the rotatable member is in the locked position, and wherein the plunger is configured retract within the handle to close the switch when the rotatable member is in the unlocked position.

In some embodiments, any one or more of the characteristics of any one or more of the systems, methods, and/or computer-readable storage mediums recited above may be combined, in whole or in part, with one another and/or with any other features or characteristics described elsewhere herein.

### BRIEF DESCRIPTION OF THE FIGURES

A better understanding of the features and advantages of the present disclosure will be obtained by reference to the following detailed description that sets forth illustrative embodiments, in which the principles of the disclosure are utilized, and the accompanying drawings of which:
FIG. 1A illustrates an exemplary outdoor power equipment system with a handle mounted in a low operating position according to some examples.
FIG. 1B illustrates the exemplary outdoor power equipment system of FIG. 1A with the handle mounted in a high operating position according to some examples.
FIG. 1C illustrates the exemplary outdoor power equipment system of FIG. 1A with the handle mounted in a storage position according to some examples.
FIG. 1D illustrates additional detail of a side plate of the exemplary outdoor power equipment system of FIG. 1A according to some examples.
FIG. 2A illustrates aspects of an exemplary safety device in a locked configuration according to some examples.
FIG. 2B illustrates aspects of the exemplary safety device of FIG. 2A in an unlocked configuration according to some examples.
FIG. 3A illustrates an exploded view of aspects of the exemplary safety device of FIGS. 2A and 2B according to some examples.
FIG. 3B illustrates an exemplary rotatable member of a safety device in an unlocked configuration according to some examples.
FIG. 3C illustrates the exemplary rotatable member of FIG. 3B in a locked configuration according to some examples.
FIG. 4 illustrates an exploded view of aspects of the exemplary safety device of FIGS. 2A and 2B according to some examples.
FIG. 5A illustrates an exemplary safety device including an optical switch assembly in a first configuration according to some examples.
FIG. 5B illustrates the exemplary safety device of FIG. 5A including an optical switch assembly in a first configuration according to some examples.
FIG. 6A illustrates an exemplary walk-behind snow blower including a safety device according to some examples.
FIG. 6B illustrates a different view of the exemplary walk-behind snow blower of FIG. 6A including a safety device according to some examples.
FIG. 6C illustrates the exemplary walk-behind snow blower of FIG. 6A with the handle mounted in a storage position according to some examples.
FIG. 7 illustrates a block diagram representing an exemplary wiring schematic according to some examples.
FIG. 8 illustrates an exemplary computing device according to some examples.
FIG. 9 illustrates another exemplary outdoor power equipment system that includes a safety device according to some examples.

### DETAILED DESCRIPTION

Disclosed herein are safety devices for outdoor power equipment systems (e.g., walk-behind lawn mowers, walk-behind snow blowers, walk-behind rototillers, wheeled chipper shredder vacs, wheeled string trimmers, etc.). An exemplary outdoor power equipment system may include a motor, a power supply, and a user-engageable safety device for selectively connecting the power supply to, or isolating the power supply from, the motor. The safety device may be configured such that a user can connect the power supply to, or isolate the power supply from, the motor by opening or closing an electrical switch (e.g., microswitch, hall effect switch, optical switch) of the safety device. The safety device may include a rotatable member configured to enable a user to open and close the switch. The rotatable member may be configured to rotate about a rotation axis between a locked position and an unlocked position. A plunger may be operatively connected to the rotatable member such that rotation of the rotatable member causes the plunger to translate along the rotation axis of the rotatable member. The plunger may be configured to open the switch when the rotatable member is in the locked position to electrically connect the power supply to the motor such that the motor can be activated. The plunger may be configured to close the switch when the rotatable member is in the unlocked position to electrically isolate the power supply from the motor such that the motor cannot be activated.

In the following description of the various embodiments, it is to be understood that the singular forms "a," "an," and "the" used in the following description are intended to include the plural forms as well, unless the context clearly indicates otherwise. It is also to be understood that the term "and/or" as used herein refers to and encompasses any and all possible combinations of one or more of the associated listed items. It is further to be understood that the terms "includes, "including," "comprises," and/or "comprising," when used herein, specify the presence of stated features, integers, steps, operations, elements, components, and/or units but do not preclude the presence or addition of one or more other features, integers, steps, operations, elements, components, units, and/or groups thereof.

Certain aspects of the present disclosure include process steps and instructions described herein in the form of an algorithm. It should be noted that the process steps and instructions of the present disclosure could be embodied in software, firmware, or hardware and, when embodied in software, could be downloaded to reside on and be operated from different platforms used by a variety of operating systems. Unless specifically stated otherwise as apparent from the following discussion, it is appreciated that, throughout the description, discussions utilizing terms such as "processing," "computing," "calculating," "determining," "displaying," "generating" or the like, refer to the action and processes of a computer system, or similar electronic computing device, that manipulates and transforms data represented as physical (electronic) quantities within the computer system memories or registers or other such information storage, transmission, or display devices.

The present disclosure in some embodiments also relates to a device for performing the operations herein. This device may be specially constructed for the required purposes, or it may comprise a general-purpose computer selectively activated or reconfigured by a computer program stored in the computer. Such a computer program may be stored in a non-transitory, computer readable storage medium, such as, but not limited to, any type of disk, including floppy disks, USB flash drives, external hard drives, optical disks, CD-ROMs, magnetic-optical disks, read-only memories (ROMs), random access memories (RAMs), EPROMs, EEPROMs, magnetic or optical cards, application specific integrated circuits (ASICs), or any type of media suitable for storing electronic instructions, and each connected to a computer system bus. Furthermore, the computing systems referred to in the specification may include a single processor or may be architectures employing multiple processor designs, such as for performing different functions or for increased computing capability. Suitable processors include central processing units (CPUs), graphical processing units (GPUs), field programmable gate arrays (FPGAs), and ASICs.

The methods, devices, and systems described herein are not inherently related to any particular computer or other apparatus. Various general-purpose systems may also be used with programs in accordance with the teachings herein, or it may prove convenient to construct a more specialized apparatus to perform the required method steps. The structure for a variety of these systems will appear from the description below. In addition, the present invention is not described with reference to any particular programming language. It will be appreciated that a variety of programming languages may be used to implement the teachings of the present disclosure as described herein.

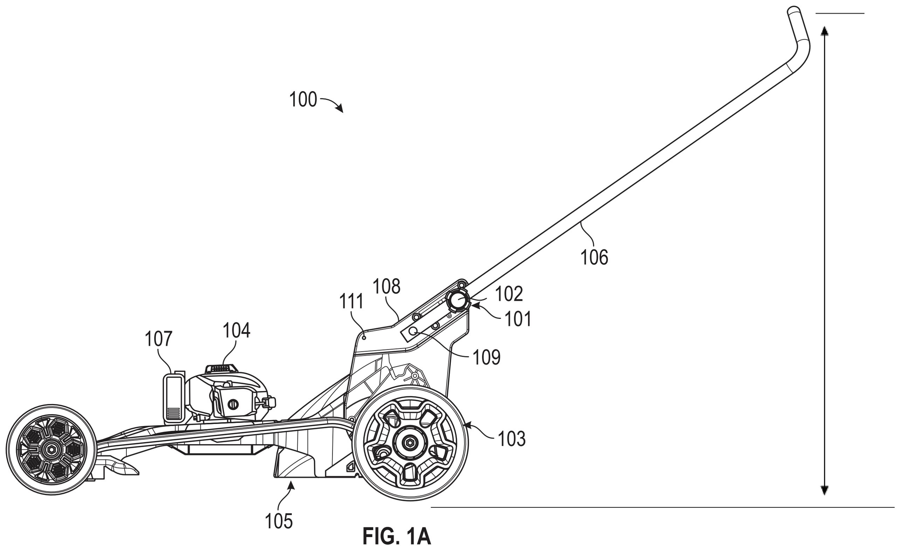

FIG. 1A illustrates an exemplary outdoor power equipment system 100 that includes a safety device 101. The outdoor power equipment system 100 may be a walk-behind lawn mower. However, it should be understood that the outdoor power equipment system 100 may be another type of outdoor power equipment system, such as a walk-behind snow blower, walk-behind rototiller, walk-behind wheeled chipper shredder vac, walk-behind wheeled string trimmer, or other outdoor power equipment system.

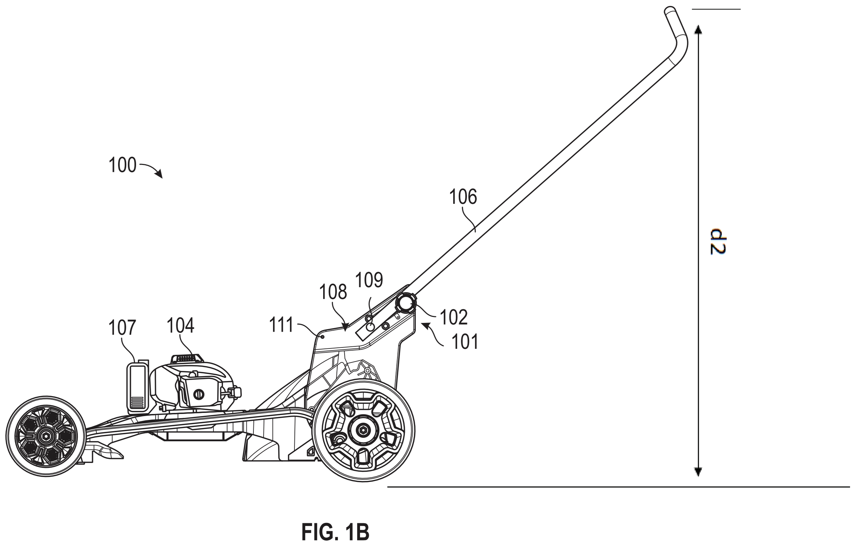

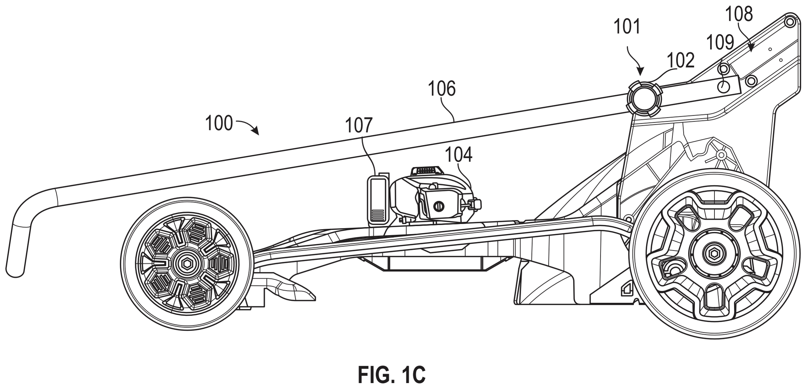

The outdoor power equipment system 100 may include a plurality of wheels 103 attached to a chassis 105. A motor 104 may be supported by the chassis 105. A side plate 108 may be connected to the chassis 105, and a handle 106 may be connected to the side plate 108 using a rotatable member 102. In some examples, a side plate 108 is included on both sides of the chassis 105 and a respective rotatable member 102 connects the handle 106 to each side plate 108. At least one of the rotatable members 102 forms part of a safety device 101. The safety device 101 may be configured to electrically isolate power supply 107 from a motor 104 when the safety device is not in a locked configuration (e.g., when the handle 106 is not in an operating position). For instance, the one or more rotatable members 102 may be configured to attach handle 106 to the side plate(s) 108 of the outdoor power equipment system 100 such that the handle 106 can be prevented from rotating about its rotation axis 109 when the safety device 101 is in a locked configuration. The one or more rotatable members 102 may also be configured such that users can unlock the handle 106 by rotating one or more rotatable members 102, enabling movement of the handle 106 about its rotation axis 109. For example, a rotatable member 102 may be connected to the handle 106 at both the left and right side of the chassis 105. A respective side plate 108 may be connected to the chassis 105 on each side of the chassis 105. The rotatable members 102 may be configured such that when a user rotates both of the rotatable members 102 (e.g., by 90 degrees), the handle may be unlocked from the side plates 108 (e.g., such that it can be moved between different operating positions and/or a storage position). FIG. 1A depicts handle 106 in a relatively low operating position (positioned at a relatively smaller distance from the ground, d1). FIG. 1B depicts the handle 106 in a relatively high operating position compared to FIG. 1A (positioned a relatively larger distance from the ground, d2). The side plate(s) 108 may also be configured such that a user can position the handle 106 in a storage position 111, as illustrated in FIG. 1C.

When the handle 106 is locked to the side plate(s) 108 in either the low operating position or high operating position (or other operating position), the safety device 101 may electrically connect the power supply 107 to the motor 104. When a user engages the rotatable member 102 to disconnect the handle 106 from side plate 108 (e.g., to rotate the handle 106 between the low position, high position, and/or storage position), the safety device 101 may disconnect the power supply 107 from the motor 104. The power supply 107 may remain disconnected from the motor 104 when the handle 106 is connected to the storage position 111 of the side plate 108. Thus, the safety device 101 may enable a user to selectively isolate the power supply 107 from the motor 104 of the outdoor power equipment system 100 to prevent activation of the motor when the handle 106 is not locked into an operating position on the side plate 108, such as the low operating position, shown in FIG. 1A, or the high operating position shown in FIG. 1B.

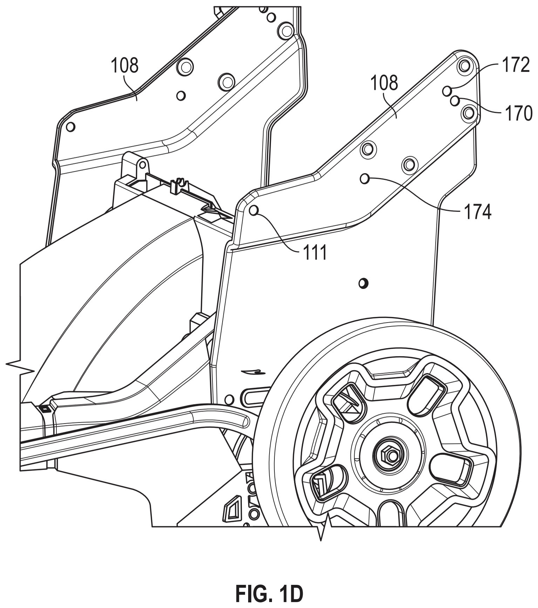

FIG. 1D illustrates additional detail of the side plate 108 of system 100. The side plate 108 may include a plurality of openings corresponding to a plurality of positions at which the handle 106 can be attached to the side plate 108 (e.g., the low position of FIG. 1A, high position of FIG. 1B, and storage position of FIG. 1C). Side plate 108 may include a first opening 170 and a second opening 172. The first opening 170 may enable a user to attach the handle 106 at the lower operating position on the side plate 108 corresponding to the configuration depicted in FIG. 1A and the second opening may enable a user to attach the handle 106 at the relatively higher operating position on the side plate 108 corresponding to the configuration depicted in FIG. 1B. Thus, the positioning of handle 106 can be adapted for users of different heights, etc. It should be understood that while FIG. 1B depicts two openings 170 and 172 corresponding to a relatively low position and relatively high position for the handle 106, the side plate may include any number of openings to attach the handle at any number of different orientations/positions. Side plate 108 may additionally include a pivot hole 174 at which the handle 106 may be rotatably attached to side plate 108. Pivot hole 174 may define the rotation axis 109 of handle 106.

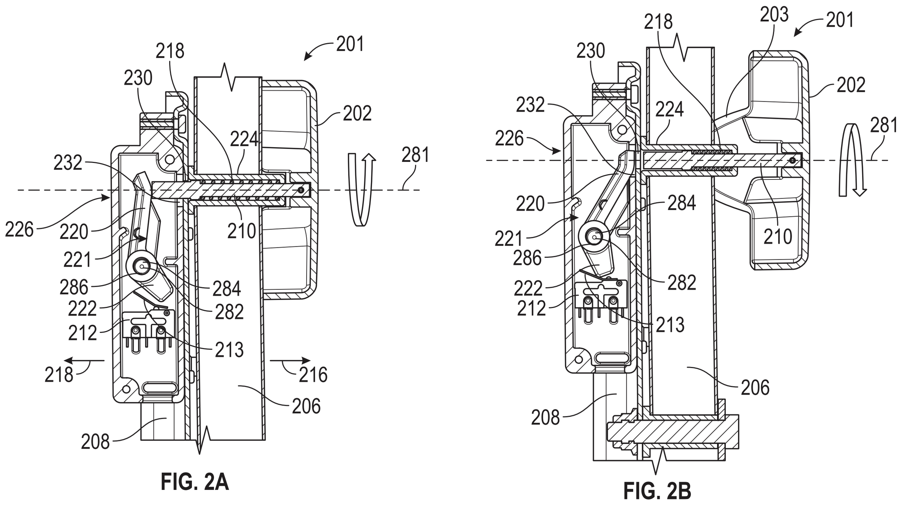

FIGS. 2A and 2B illustrate detailed section views of a safety device 201 that may be used for, or may share one or more features in common with, safety device 101. The safety device 201 may be configured to enable a user to isolate a power supply (e.g., power supply 107) from a motor (e.g., motor 104 of system 100). The safety device may include a housing 226 and a rotatable member 202. The rotatable member 202 may be configured to enable a user to toggle between a locked configuration, an example of which is depicted in FIG. 2A, and an unlocked configuration, an example of which is depicted in FIG. 2B. The housing 226 may be connected to a side plate 208 (which may be used for side plate 108 of outdoor power equipment system 100) and rotatable member 202 may be connected to a handle 206 (which may be used for handle 106 of outdoor power equipment system 100). The housing 226 may be positioned on a first side 216 of the handle 206 and the rotatable member 202 may be positioned on a second side 218 of the handle 206. The plunger 210 may "lock" the handle 206 in position such that it cannot rotate about its rotation axis (e.g., rotation axis 109 of outdoor power equipment system 100).

The rotatable member 202 may be operatively connected to the plunger 210. In a locked configuration (e.g., as depicted in FIG. 2A), the plunger 210 may extend through a spacer 224 in the handle 206 from a first side 216 to a second side 218 and into the housing 226. The plunger 210 may extend into housing 226 through a hole 230 in the side plate 208 and an opening 232 in the housing 226. The plunger 210 may be configured to contact a lever 221 in the locked configuration. The lever 221 may be mounted to a post 284 via an aperture 286 and the lever 221 may be configured to rotate about a rotation axis 282 defined by the post 284. The lever 221 may include a lever arm 220 and a cam 222. In the locked configuration, the plunger 210 may push the lever arm 220 away from handle 206, and when the plunger 210 pushes the lever arm 220 away from the handle 206, cam 222 may rotate toward handle 206, moving the cam 222 away from a switch 212. The switch may be a microswitch or hall effect switch. The switch 212 may include two circuits. One circuit may be normally open, and another circuit may be normally closed. In the locked configuration depicted in FIG. 2A, the cam 222 is not in contact with the actuator 213 of switch 212 (e.g., the cam 222 is not pushing the actuator 213 down to close the normally open circuit) and the normally open circuit of switch 212 is open. In the locked configuration, the switch 212 may electrically connect a power supply (e.g., power supply 107) to the motor (e.g., motor 104).

To transition the safety device 201 from the locked configuration (shown in FIG. 2A) to an unlocked configuration (shown in FIG. 2B), a user may rotate the rotatable member 202 about a rotation axis 281. The rotatable member 202 may include a cam edge 203. As the rotatable member 202 is rotated, the cam edge 203 may cause the rotatable member to translate along the rotation axis 281. Rotating the rotatable member 202 to transition from the locked configuration (shown in FIG. 2A) to the unlocked configuration (shown in FIG. 2B) may cause the rotatable member 202 to translate toward the first side 216 (e.g., away from the housing 226). When the rotatable member 202 is rotated, the plunger 210 may also translate along the rotation axis 281. The plunger 210 may translate in the same direction along rotation axis 281 as the rotatable member 202. Accordingly, rotating the rotatable member 202 to transition from the locked configuration (shown in FIG. 2A) to the unlocked configuration (shown in FIG. 2B) may cause the plunger 210 to translate toward the first side 216.

As a user rotates the rotatable member 202 to toggle from the locked configuration shown in FIG. 2A to the unlocked configuration shown in FIG. 2B, the plunger 210 may be withdrawn from the housing 226 of safety device 201 as the plunger 210 translates toward the first side 216 of handle 206. In the unlocked configuration (e.g., as depicted in FIG. 2B), the plunger 210 may extend into the spacer 224 in the handle 206 but may not extend through the handle 206 to the second side 218 of the handle 206. The plunger 210 thus may not contact the lever 221 in the unlocked configuration to push the lever arm 220 away from the handle 206 (e.g., toward the second side 218). As the plunger 210 is withdrawn from the housing 226, the lever 221 may rotate about the rotation axis 282 defined by the post 284 toward the first side of the handle 206 (e.g., in the direction of the movement of plunger 210). In the unlocked configuration, the lever arm 220 may thus be positioned relatively closer to handle 206. As the lever arm 220 rotates toward handle 206, the cam 222 may rotate away from the handle 206. In the unlocked configuration, the cam 222 may contact and push against the actuator 213 of switch 212, closing the normally open circuit of switch 212. In the unlocked configuration (e.g., as shown in FIG. 2B), the switch 212 may electrically isolate the power supply (e.g., power supply 107) from the motor (e.g., motor 104).

The rotatable member may be rotatable in a counterclockwise and clockwise direction. Rotating the rotatable member 202 in any direction (e.g., clockwise or counterclockwise) may cause the rotatable member 202 to translate along the rotation axis 281. Rotation of the rotatable member by 90 degrees in either of a counterclockwise or clockwise direction may transition the safety device 201 between the locked configuration (FIG. 2A) and the unlocked configuration (FIG. 2B). The direction of translation induced by rotation (e.g., toward the first side 216 or the second side 218) may depend on one or both of the direction of rotation and orientation of the cam edge 203 of the rotatable member 202 relative to the handle 206. In some orientations, the cam edge 203 may be positioned such that rotation of the rotatable member in a clockwise direction induces translation toward the first side 216. In some orientations, the cam edge 203 may be positioned such that rotation of the rotatable member in a clockwise direction induces translation toward the second side 216. Likewise, in some orientations, the cam edge 203 may be positioned such that rotation of the rotatable member in a counter-clockwise direction induces translation toward the first side 216, and in some orientations, the cam edge 203 may be positioned such that rotation of the rotatable member in a counter-clockwise direction induces translation toward the first side 216.

The rotatable member 202 may be biased toward the locked configuration (e.g., as depicted in FIG. 2A) by a biasing member 218. The biasing member 218 may be connected to the plunger 210 and may be configured to bias the plunger toward the first side 216 of handle 206 (e.g., into the housing 216). The plunger 210 may be connected to the rotatable member 202. The biasing force exerted against the plunger 210 may, in turn, bias the rotatable member 202 toward the first side 216. The biasing member 230 may push the plunger 210 toward the first side 216 (and into housing 226), and translation of the plunger 210 may induce both rotation of the rotatable member 202 and corresponding translation of the rotatable member 202 toward the first side 216 of the handle 206.

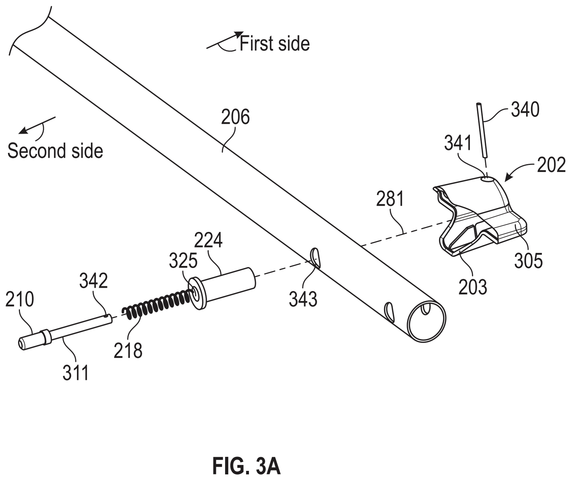

FIG. 3A illustrates an exploded view of aspects of the safety device 201. As discussed with reference to FIGS. 2A and 2B, and as illustrated in FIG. 3A, rotatable member 202 is configured to connect to a handle 206 (e.g., of power equipment system 100) on a first side of the handle 206. Plunger 210 is configured to connect to the rotatable member 202 using a pin 340 that is inserted into an opening 341 in the rotatable member 202 and an opening 342 in the plunger 210. The opening 341 in the in the rotatable member 202 may be aligned with the opening 342 in the plunger 210 when the plunger 210 is connected to the rotatable member 202. As described with reference to FIGS. 2A and 2B, spacer 224 may be configured such that it can be positioned within handle 206. Spacer 224 may be inserted into handle 206 via an opening 343 in the handle 206. The spacer may define a hollow cylindrical tube 325 into which the plunger 210 may extend when the exploded view depicted in FIG. 3A is assembled. The plunger 310 may include a flange 311. The biasing member 218 (e.g., a spring) may be configured such that it can be positioned within the spacer and exert a force against the flange 311 in certain configurations. As discussed with reference to FIGS. 2A and 2B, the biasing member may bias the plunger 210 toward the second side of handle 206 and into a housing of a safety device 201, such as housing 226 of FIGS. 2A and 2B.

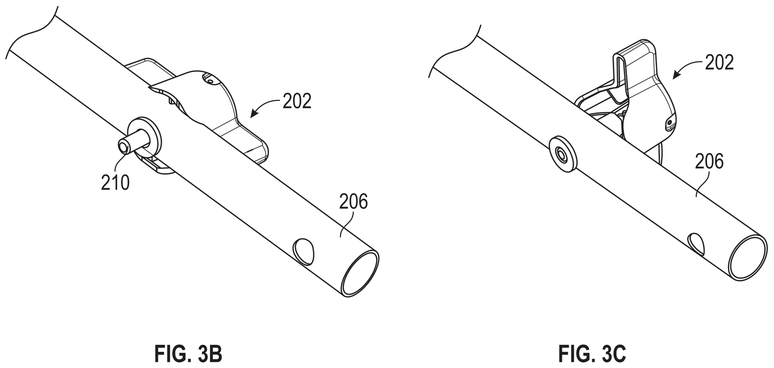

The rotatable member 202 may include one or more wings 305, which provide an ergonomic grip for users to rotate the rotatable member. As discussed with reference to FIGS. 2A and 2B, the rotatable member 202 may include a cam edge 203. The cam edge may be shaped to conform to a cylindrical profile of the handle 206. When the rotatable member 202 is rotated, the cam edge 203 may cause the rotatable member 202 to translate along the rotation axis 281 of the rotatable member. FIG. 3B illustrates the rotatable member 202 oriented such that the cam edge 203 conforms to the cylindrical profile of the handle 206. FIG. 3B depicts the orientation of the rotatable member 202 corresponding to the locked configuration depicted in FIG. 2A and described above. As shown in FIG. 3B, the plunger 210 extends through the handle 206 from the first side to the second side. FIG. 3C depicts the rotatable member 202 in the unlocked configuration corresponding to FIG. 2B, described above. As the rotatable member 202 is rotated, the cam edge 203 may cause the rotatable member 202 to translate along its rotation axis, pushing the rotatable member in the direction of the first side of the handle 206. The plunger 310 may be connected to the rotatable member 202 and thus may translate along with the rotatable member. As shown in FIG. 3C, the plunger 210 is withdrawn into the handle 206 (e.g., such that the handle 206 would no longer be locked in place via a connection to a side plate, such as side plate 208 of FIGS. 2A and 2B.

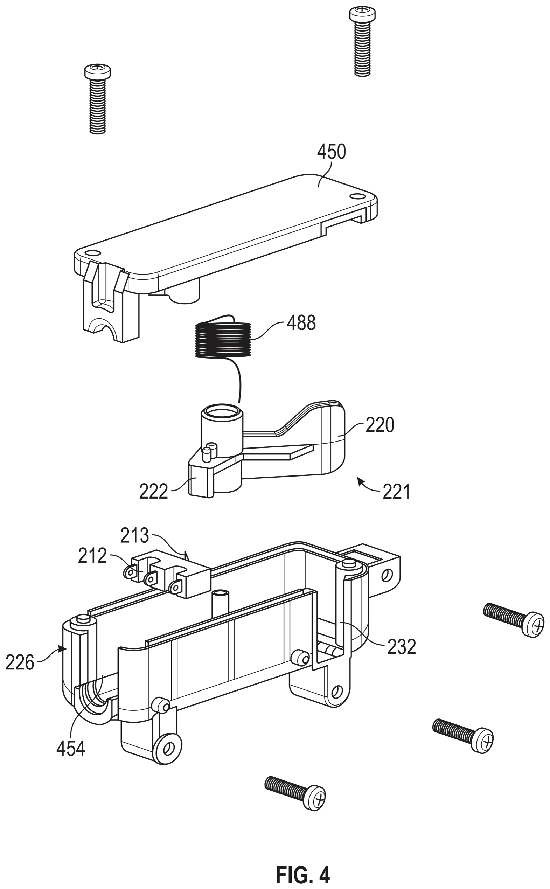

FIG. 4 illustrates an exploded view of additional aspects of safety device 201 depicted in FIGS. 2A and 2B. As discussed with reference to FIGS. 2A and 2B, safety device 201 may include a housing 226. A cover 450 may be configured to be connected to the housing 226. The housing 226 and cover 450 may at least partially enclose a plurality of components of safety device 201. The housing 226 and cover 450 may protect the plurality of components from environmental conditions (e.g., rain, debris, etc.). The housing 226 may include a first opening 232 through which a plunger (e.g., plunger 210 of FIGS. 2A and 2B) may extend into housing 226. The housing 226 may include a second opening 454 through which one or more electrical conduits (e.g., wires) may extend to provide electrical connections to a power source (e.g., power supply 107) and/or motor (e.g., motor 104) of an outdoor power equipment system. As depicted in FIG. 4 the lever 221 may be configured to be attached to a biasing member 488. The biasing member 488 may be a torsional spring configured to bias the lever toward the position depicted in FIG. 2B, such that the cam 222 of the lever does not contact the actuator 213 of switch 212 when the safety device 201 is in the unlocked configuration.

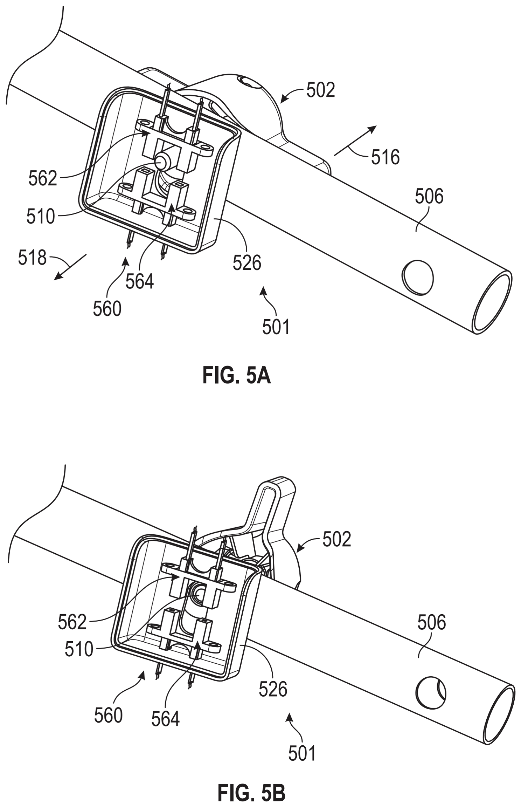

FIGS. 5A and 5B illustrate aspects of a safety device 501 that utilizes an optical switch assembly 560 configured to enable a user electrically connect or isolate a power supply from a motor of an outdoor power equipment system, such as the outdoor power equipment system 100 depicted in FIG. 1. Safety device 501 may include one or more aspects of the safety device 201 depicted in FIGS. 2A-3B. For instance, safety device 501 may include a rotatable member 502 and a plunger 510. The rotatable member may be configured to toggle between a locked configuration, an example of which is depicted in FIG. 5A, and an unlocked configuration, an example of which is depicted in FIG. 5B. Safety device 501 may include a housing 526. The housing 526 may be connected to a side plate (e.g., side plate 108 of outdoor power equipment system 100). The rotatable member 502 may be positioned on a first side 516 of the handle 506 and the housing 526 may be positioned on a second side 518 of the handle 506. The plunger 510 may be configured "lock" the handle 506 in position when the safety device 501 is in the locked configuration such that the handle 506 cannot rotate about its rotation axis (e.g., rotation axis 109 of outdoor power equipment system 100).

The rotatable member 502 may be operatively connected to a plunger 510. The rotatable member 502 may be operatively connected to the plunger 510 in the same manner as rotatable member 202 and plunger 210 described with reference to FIGS. 2A-3B. In a locked configuration (e.g., as depicted in FIG. 5A), the plunger 510 may extend through the handle 506 from a first side 516 to a second side 518 and into the housing 526. The optical switch assembly 560 may be positioned in the housing 526. Optical switch assembly 560 may include one or more optical switches, including optical switch 562 and optical switch 564, configured to enable a user to selectively isolate a power supply from a motor (e.g., power supply 107 and motor 104 of system 100). A first optical switch 562 may be aligned with a first mounting position for the handle 506 (e.g., the high operating position associated with opening 172 on side plate 108) and a second optical switch 564 may be aligned with a second mounting position for the handle 506 (e.g., the low operating position associated with opening 170 on side plate 108).

The optical switch assembly 560 may be configured to connect a power supply to a motor of an outdoor power equipment system (e.g., power supply 107 to motor 104 of outdoor power equipment system 100) when the plunger 510 blocks one or more of the optical switches (e.g., when plunger 510 blocks a sensor of one or more of the optical switches), including optical switch 562 and optical switch 564. Optical switch assembly 560 may be configured to electrically isolate the power supply from the motor of an outdoor power equipment system (e.g., power supply 107 to motor 104 of outdoor power equipment system 100) whenever both of the optical switches included in optical switch assembly 560, including optical switch 562 and optical switch 564 are unblocked. When a user unlocks safety device 510 (e.g., by rotating the rotatable member 502 to withdraw the plunger 510 from the housing 526 of safety device 501), both of the optical switches included in optical switch assembly 560 may be unblocked and the power supply may be disconnected from the motor.

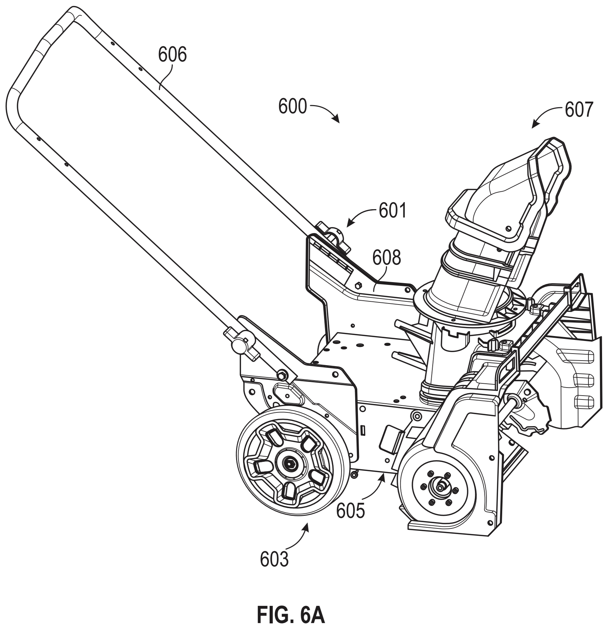

FIGS. 6A-6C illustrate an outdoor power equipment system 600 that includes a safety device 601. The outdoor power equipment system 600 may be a walk behind snow blower. The safety device 601 may include any or all of the aspects of safety device 101, 201, and/or 501 described above. The outdoor power equipment system 600 may include a plurality of wheels 603 attached to a chassis 605. A snow blower assembly 607 may be supported by the chassis 605. A side plate 608 may be connected to the chassis 605, and a safety device 601 and handle 606 may be connected to the side plate 608. The safety device 601 may enable a user to selectively isolate a power supply included in the snow blower assembly 607 from a motor of the snow blower assembly 607 to prevent activation of the motor when the handle 606 is not locked in position and/or when the handle 606 is in a storage position.

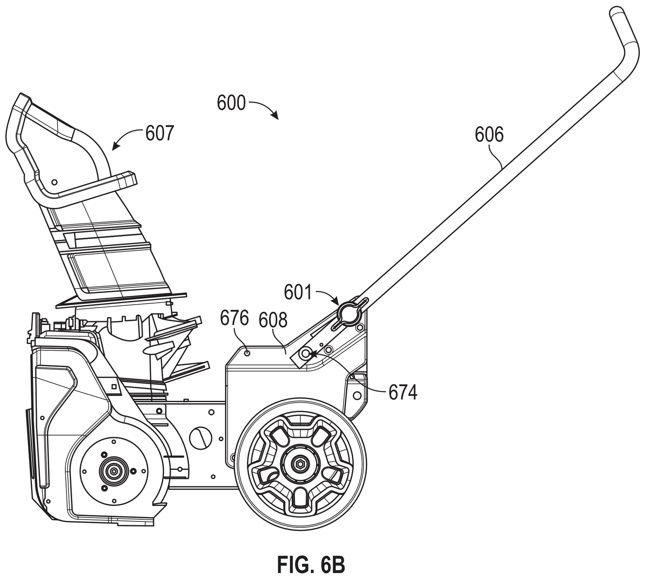

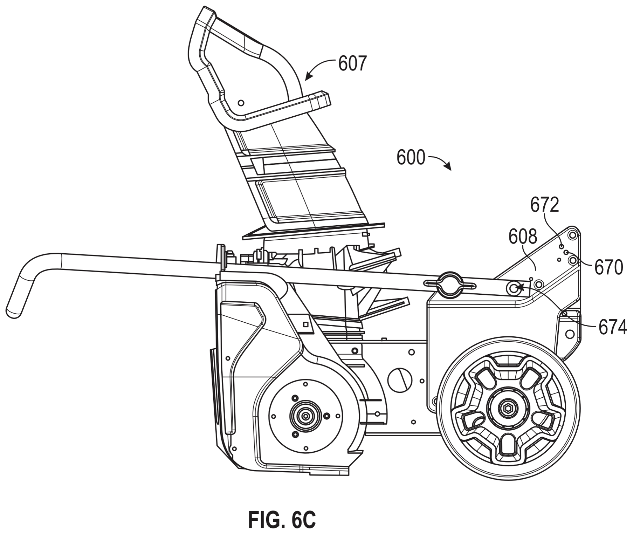

The safety device 601 may attach handle 606 to the side plate 608 of the outdoor power equipment system 600 such that the handle 606 can be prevented from rotating about its rotation axis 674 when the safety device 601 is in a locked configuration. The safety device 601 may also be configured such that users can unlock the safety device 601 to move the handle 106 about its rotation axis 674. FIGS. 6B and 6C show openings in the side plate 608 corresponding to different mounting positions for the handle 606. For instance, in FIG. 6B, the handle is locked into the side plate 608 at one of either a low operating position or a high operating position, and the opening 676 corresponding to the storage position is visible. In FIG. 6C, the openings 670 and 670, corresponding to the low operating position and the high operating position, respectively, are visible. The safety device 601 may include a locking mechanism that extends through one of the openings in the side plate to lock the handle 606 into position. For instance, in FIGS. 6A and 6B, the safety device 601 may be locked into opening 672 corresponding to the high operating position. In FIG. 6C, the safety device 601 is locked into the opening 676 corresponding to the storage opposition.

When the handle 606 is locked to the side plate 608 in either the low operating position or high operating position (or other operating position), the safety device 601 may electrically connect the power supply to the motor of the snow blower assembly 607. When a user engages the safety device 601 to disconnect the handle 606 from side plate 608 (e.g., to rotate the handle 606 between the low position, high position, and/or storage position), the safety device 601 may disconnect the power supply from the motor of the snow blower assembly 607. The power supply may remain disconnected from the motor when the handle 606 is connected to the storage position 676 of the side plate 608.

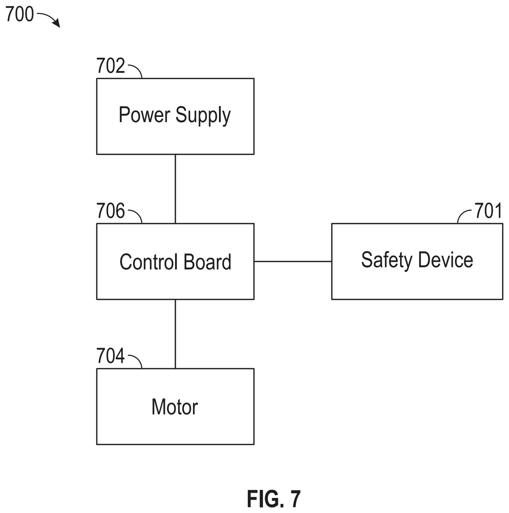

FIG. 7 illustrates a block diagram representing an exemplary wiring schematic 700 electrically connecting a user-engageable safety device 701 that may include aspects of, or be used for, any of all of the safety devices disclosed herein, between power supply 702 and motor 704. The power supply 702 and motor 704 may each be connected to a control board 706 (e.g., a printed circuit board or other computing device). The control board 706 may be configured to electrically connect and/or disconnect the power supply 702 from the motor 704. The control board 706 may be configured to electrically connect and/or disconnect the power supply 702 from the motor 704 based on one or more external signals. The control board 706 may be configured to electrically connect and/or disconnect the power supply 702 from the motor 704 based on a signal received from safety device 701. For instance, the control board 706 may be configured to electrically connect the power supply 702 to the motor 704 when a first signal is received from the safety device 701, and the control board 706 may be configured to electrically disconnect the power supply 702 from the motor 704 when a second signal is received from the safety device 701. The safety device may be configured such that a user can selectively activate the first signal and/or second signal by engaging the safety device, for instance, according to the examples disclosed above.

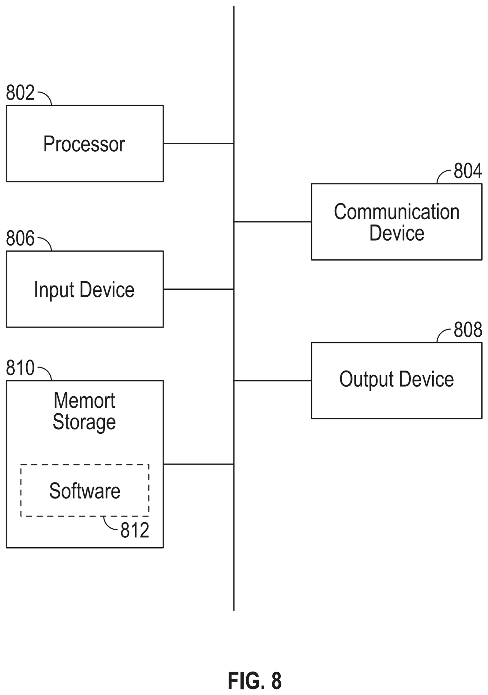

FIG. 8 depicts an exemplary computing device 800, in accordance with one or more examples of the disclosure. Device 800 can be a host computer connected to a network. Device 800 can be a client computer or a server. As shown in FIG. 8, device 800 can be any suitable type of microprocessor-based device, such as a personal computer, workstation, server, or handheld computing device (portable electronic device) such as a phone or tablet. The device can include, for example, one or more of processors 802, input device 806, output device 808, storage 810, and communication device 804. Input device 806 and output device 808 can generally correspond to those described above and can either be connectable or integrated with the computer.

Input device 806 can be any suitable device that provides input, such as a touch screen, keyboard or keypad, mouse, or voice-recognition device. Output device 808 can be any suitable device that provides output, such as a touch screen, haptics device, or speaker.

Storage 810 can be any suitable device that provides storage, such as an electrical, magnetic, or optical memory, including a RAM, cache, hard drive, or removable storage disk. Communication device 804 can include any suitable device capable of transmitting and receiving signals over a network, such as a network interface chip or device. The components of the computer can be connected in any suitable manner, such as via a physical bus or wirelessly.

Software 812, which can be stored in storage 810 and executed by processor 802, can include, for example, the programming that embodies the functionality of the present disclosure (e.g., as embodied in the devices as described above).

Software 812 can also be stored and/or transported within any non-transitory computer-readable storage medium for use by or in connection with an instruction execution system, apparatus, or device, such as those described above, that can fetch instructions associated with the software from the instruction execution system, apparatus, or device and execute the instructions. In the context of this disclosure, a computer-readable storage medium can be any medium, such as storage 810, that can contain or store programming for use by or in connection with an instruction execution system, apparatus, or device.

Software 812 can also be propagated within any transport medium for use by or in connection with an instruction execution system, apparatus, or device, such as those described above, that can fetch instructions associated with the software from the instruction execution system, apparatus, or device and execute the instructions. In the context of this disclosure, a transport medium can be any medium that can communicate, propagate, or transport programming for use by or in connection with an instruction execution system, apparatus, or device. The transport readable medium can include, but is not limited to, an electronic, magnetic, optical, electromagnetic, or infrared wired or wireless propagation medium.

Device 800 may be connected to a network, which can be any suitable type of interconnected communication system. The network can implement any suitable communications protocol and can be secured by any suitable security protocol. The network can comprise network links of any suitable arrangement that can implement the transmission and reception of network signals, such as wireless network connections, T1 or T3 lines, cable networks, DSL, or telephone lines.

Device 800 can implement any operating system suitable for operating on the network. Software 812 can be written in any suitable programming language, such as C, C++, Java, or Python. In various embodiments, application software embodying the functionality of the present disclosure can be deployed in different configurations, such as in a client/server arrangement or through a Web browser as a Web-based application or Web service, for example.

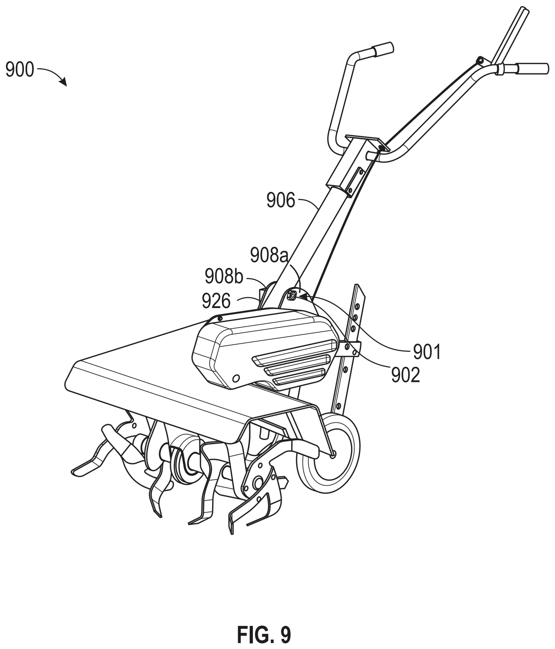

FIG. 9 illustrates another outdoor power equipment system 900 that includes a safety device 901, according to the examples disclosed herein. The safety device 901 may include any of the features described with reference to safety devices 101, 201, 501, 601, and/or 701 and may enable a user to selectively isolate a power supply of outdoor power equipment system 900 from a motor of the outdoor power equipment system 900. Safety device 901 may include a rotatable member 902 attached to a first side plate 908a and a housing 926 attached to a second side plate 908b. Handle 906 may be positioned between side plate 908a and 908b and configured to be locked into one or more operating positioned using safety device 901. The safety device 901 and handle 906 may also be configured such that users can unlock the safety device 901 to move (e.g., rotate) the handle 906 between different operating positions and/or a storage position. The safety device 901 may enable a user to selectively isolate a power supply included in the outdoor power equipment system 900 from a motor of the power equipment system 900 to prevent activation of the motor when the handle 906 is not locked in an operating position and/or when the handle 906 is in a storage position. The operating position(s) and storage position may correspond to openings in the side plate 908a and/or 908b. The safety device 901 may be configured to lock the handle 906 into one of the operating position(s) or the storage position, for instance, using a rotatable member 902 and plunger, as described throughout. Outdoor power equipment system 900 may be a rototiller.

Although the disclosure and examples have been fully described with reference to the accompanying figures, it is to be noted that various changes and modifications will become apparent to those skilled in the art. Such changes and modifications are to be understood as being included within the scope of the disclosure and examples as defined by the claims. Finally, the entire disclosure of the patents and publications referred to in this application are hereby incorporated herein by reference.

## Claims

1. An outdoor power equipment system comprising:
a motor;
a power supply; and
a user-engageable safety device, the safety device comprising:
a rotatable member connected to a handle of the outdoor power equipment, wherein the rotatable member is configured to rotate about a rotation axis between a locked position and an unlocked position;
a plunger operatively connected to the rotatable member such that rotation of the rotatable member causes the plunger to translate along the rotation axis of the rotatable member; and
a switch, wherein:
the plunger is configured to extend through the handle to open the switch when the rotatable member is in the locked position to electrically connect the power supply to the motor such that the motor can be activated, and wherein the plunger is configured to retract within the handle to close the switch when the rotatable member is in the unlocked position to electrically isolate the power supply from the motor such that the motor cannot be activated.

2. The outdoor power equipment system of claim 1, wherein the rotatable member is configured such that rotation of the rotatable member causes the rotatable member to translate along the rotation axis.

3. The outdoor power equipment system of claim 2, wherein the rotatable member is configured such that rotation of the rotatable member by 90 degrees causes the rotatable member to translate between the locked position and the unlocked position.

4. The outdoor power equipment system of claim 2 or claim 3, wherein rotation of the rotatable member causes the rotatable member and the plunger to translate along the rotation axis in the same direction.

5. The outdoor power equipment system of any preceding claim, wherein the rotatable member is positioned on a first side of the handle and the switch is positioned on a second side of the handle opposite the first side.

6. The outdoor power equipment system of claim 5, wherein the plunger is biased toward the second side by a biasing member.

7. The outdoor power equipment system of any preceding claim, wherein the safety device comprises: a lever; and a cam, wherein translation of the plunger causes the lever to rotate about a second rotation axis, and wherein the cam is attached to the lever such that the cam rotates with the lever.

8. The outdoor power equipment system of claim 7, wherein the cam is configured to engage the switch when the rotatable member is in the unlocked position and wherein the cam is configured to disengage the switch when the rotatable member is in the locked position.

9. The outdoor power equipment system of any preceding claim, wherein the switch comprises a normally open portion and a normally closed portion, and wherein when the rotatable member is in the locked position, the normally open portion is open, and wherein when the rotatable member is in the unlocked position, the normally open portion is closed.

10. The outdoor power equipment system of claim 1, wherein the switch is a microswitch, an optical switch, or a hall effect switch.

11. The outdoor power equipment system of any preceding claim, wherein the switch is disposed within a housing of the safety device; and optionally wherein the housing is configured to be mounted to a side plate of the outdoor power equipment.

12. The outdoor power equipment system of claim 11, wherein the plunger extends into the housing when the rotatable member is in the locked position.

13. The outdoor power equipment system of any preceding claim, wherein the rotatable member is configured to lock the handle such that the handle is prevented from rotating about a handle rotation axis when the rotatable member is in the locked position, and/or wherein the rotatable member is configured to unlock the handle such that the handle is free to rotate about a handle rotation axis when the rotatable member is in the unlocked position.

14. The outdoor power equipment system of any preceding claim, wherein the outdoor power equipment system is a walk-behind mower.

15. A safety device for outdoor power equipment comprising:
a rotatable member configured to be connected to a handle of the outdoor power equipment, wherein the rotatable member is configured to rotate about a rotation axis between a locked position and an unlocked position;
a plunger operatively connected to the rotatable member such that rotation of the rotatable member causes the plunger to translate along the rotation axis of the rotatable member; and
a switch, wherein:
the plunger is configured to extend through the handle to open the switch when the rotatable member is in the locked position, and wherein the plunger is configured to retract within the handle to close the switch when the rotatable member is in the unlocked position.
